Europäisches Patentamt

(19) European Patent Office

Office européen des brevets

(11) Veröffentlichungsnummer : **0 048 934**
**B1**

(12) EUROPÄISCHE PATENTSCHRIFT

(45) Veröffentlichungstag der Patentschrift :
28.08.85

(51) Int. Cl.⁴ : **H 02 M   3/335**

(21) Anmeldenummer : **81107529.0**

(22) Anmeldetag : **22.09.81**

(54) **Anordnung mit einer Regeleinrichtung mit einem geregelten Kreis und einem damit gekoppelten weiteren Kreis.**

(30) Priorität : 29.09.80 DE 3036616

(43) Veröffentlichungstag der Anmeldung :
07.04.82 Patentblatt 82/14

(45) Bekanntmachung des Hinweises auf die Patenterteilung : 28.08.85 Patentblatt 85/35

(84) Benannte Vertragsstaaten :
AT BE CH FR GB IT LI NL SE

(56) Entgegenhaltungen :
EP-A- 0 008 708
DE-A- 2 755 510
DE-A- 2 938 162
GB-A- 1 505 916
GB-A- 2 013 377
US-A- 3 543 139

(73) Patentinhaber : Siemens Aktiengesellschaft
Berlin und München Wittelsbacherplatz 2
D-8000 München 2 (DE)

(72) Erfinder : Rambold, Klaus, Dipl.-Ing.
Kreuzweg 15
D-8035 Stockdorf (DE)

EP 0 048 934 B1

Jouve, 18, rue St-Denis, 75001 Paris, France

## Beschreibung

Die Erfindung bezieth sich auf eine Anordnung mit einer Regeleinrichtung zur Regelung einer elektrischen Spannung auf einen konstanten Wert mit Hilfe eines Reglers, wobei die konstant zu haltende Spannung über einen geregelten Kreis zu einem Verbraucher geführt ist und wenigstens ein mit dem geregelten Kreis gekoppelter weiterer Kreis vorhanden ist, an den ein weiterer Verbraucher angeschlossen ist und wobei das vom Regler gesteuerte Stellglied allen Kreisen vorgeschaltet ist, wobei bei dem weiteren Kreis bzw. bei einem der weiteren Kreise zur Begrenzung des Variationsbereiches der dem weiteren Verbraucher über den weiteren Kreis zugeführten Spannung eine Einrichtung zur Bildung eines Mischwertes aus den Ausgangsgrößen des geregelten Kreises und wenigstens eines weiteren Kreises vorgesehen ist und der von dieser Einrichtung gebildete Mischwert dem Istwerteingang des Reglers zugeführt ist, wobei die Einrichtung zur Bildung eines Mischwertes je zugeführter Ausgangsspannung einen Spannungsteiler enthält und wobei die Spannungsteiler einen gemeinsamen Fußpunkt haben und an ihren Abgriffen miteinander verbunden sind und wobei die zwischen der Verbindung der Abgriffe und dem gemeinsamen Fußpunkt liegende Spannung an den Istwerteingang des Reglers geführt ist.

Eine derartige Anordnung ist bereits aus der GB-A-15 05 916 bekannt. Bei der bekannten Anordnung haben die Ausgangsspannungen, die zur Bildung des Mischwertes herangezogen werden, die gleiche Polarität gegenüber einem gemeinsamen Nullpotential.

Weiterhin ist aus der DE-A-27 55 510 bereits eine Stromversorgungseinrichtung bekannt, die aus wenigstens zwei ausgangsseitig ohne Entkopplungsmittel parallelgeschalteten spannungsgeregelten Stromversorgungsgeräten besteht. Jedes Stromversorgungsgerät hat zusätzlich zum Hauptkreis eine Hilfskreis, in dem eine Leerlaufspannung erzeugt wird. Um eine ständige Betriebsbereitschaft und eine nahezu gleichmäßige Lastaufteilung der beiden Stromversorgungsgeräte sicherzustellken, wird dem Istwerteingang des Reglers ein Mischwert, abgeleitet von der gemeinsamen Ausgangsspannung der beiden Stromversorgungsgeräte und der Leerlaufspannung des betreffenden Stromversorgungsgerätes zugeführt. Am Istwerteingang des Reglers ist ein Mischwert aus den Ausgangsspannungen von zwei gekoppelten Kreisen zugeführt. Die Einrichtung zur Bildung des Mischwertes besteht aus einem Spannungsteiler für je eine zugeführte Ausgangsspannung. Die Spannungsteiler haben einen gemeinsamen Fußpunkt und sind miteinander an ihren Abgriffen verbunden. Die zwischen der Verbindung der Abgriffe und dem gemeinsamen Fußpunkt liegende Spannung ist an den Istwerteingang des Reglers geführt. Die beiden Spannungsteiler sind gleich ausgebildet und haben deshalb das gleiche dynamische Verhalten.

Haben bei einer Regeleinrichtung der eingangs genannten Art die Ausgangsspannungen die gleiche Polarität in bezug auf das an einer einpoligen Verbindung der Kreise liegende Nullpotential, so liegt der gemeinsame Fußpunkt zweckmäßigerweise am Nullpotential. Haben die Ausgangsspannungen dagegen die einander entgegengesetzte Polarität in bezug auf das an einer einpoligen Verbindung der Kreise liegende Nullpotential, so läßt sich auf diese Weise kein für die Regelung geeigneter Mischwert gewinnen.

Der Erfindung liegt daher die Aufgabe zugrunde, eine Anordnung mit einer Regeleinrichtung, bei der eine konstant zu haltende Größe über eine geregelten Kreis zu einem Verbraucher geführt ist und an wenigstens einen mit dem geregelten Kreis gekoppelten weiteren Kreis ein weiterer Verbraucher angeschlossen ist und die Ausgangsspannungen in bezug auf ein gemeinsames Nullpotential entgegengesetzt gepolt sind, derart zu vervollkommen, daß bei dynamischen Änderungen der Belastung des geregelten Kreises die Änderungen der Ausgangsgröße wenigstens eines der Kreise, insbesondere eines der weiteren Kreise, ein vorgegebenes Maß nicht übersteigt. Insbesondere sollen dabei im Falle eines Lastabwurfs am geregelten Kreis Störungen an den Kreisen bzw. ein vorgegebenes Maß übersteigende Abweichungen vermieden werden. Insbesondere ist die Anordnung dabei ein nach dem Umrichterprinzip arbeitendes Stromversorgungsgerät mit mehreren Ausgangskreisen.

Gemäß der Erfindung wird die Anordnung zur Lösung dieser Aufgabe derart ausgebildet, daß die Ausgangsspannungen die einander entgegengesetzte Polarität in bezug auf das an einer einpoligen Verbindung der Kreise liegende Nullpotential haben und daß der gemeinsame Fußpunkt an der spannungsführenden Seite des Ausganges des geregelten Kreises liegt.

Durch diese Maßnahme ergibt sich der Vorteil, daß bei einer Anordnung mit entgegengesetzt gepolten Ausgangsspannungen der dynamische Stellbereich des Reglers begrenzt wird. Vorteilhaft ist ferner, daß der Stellbereich dabei je nach Zustand und dynamischem Vorgang selbsttätig so begrenzt wird, daß die Ausgangsgröße des weiteren Kreises oder der weiteren Kreise einen vorgegebenen Toleranzbereich nicht verläßt. Ein weiterer Vorteil besteht darin, daß sich der Einfluß von Belastungsänderungen ohne aufwendige Maßnahmen zur Glättung der Ausgangsspannungen bzw. entsprechende Bemessung der Siebmittel wesentlich herabsetzen läßt.

Dabei können die Zweige der Spannungsteiler, die zwischen gemeinsamen Fußpunkt und der Verbindung der Abgriffe liegen, zu einem gemeinsamen Zweig zusammengefaßt sein. Der Istwert des geregelten Kreises kann mit einem oder mit mehreren Istwerten weiterer Kreise gemischt werden.

Ist die Ausgangsspannung des weiteren Kreises von der Ausgangsspannung des geregelten Kreises verschieden, so wird der Regler zweckmäßigerweise mit seinem Eingang für die Versorgungsspannung an den Ausgang des weiteren Kreises angeschlossen. Eine derartige Maßnahme ist bei vergleichbaren Anordnungen ohne Begrenzung des Variationsbereiches nicht ohne weiteres möglich, da bei Lastabwurf an dem geregelten Kreis die Spannung am Ausgang des weiteren Kreises und damit auch die Versorgungsspannung des Reglers absinkt und dies dann so weit führen kann, daß der Regler mangels Versorgungsspannung die geregelte Spannung auf einem zu niedrigen Wert hält und, weil damit auch seine Versorgungsspannung zu niedrig bleibt, nicht mehr in den Normalzustand zurückkehren kann. Dieser Effekt wird bei der genannten Ausgestaltung der Erfindung in vorteilhafter Weise sicher vermieden.

Bei einer Ausbildung des Reglers als Regler mit P-, PD- oder PID-Verhalten hat die Begrenzung des Stellbereiches besondere Vorteile gegenüber einer festen Begrenzung am Reglerausgang, da diese Regler dynamisch stark überschwingen können und durch die vorgeschlagene Maßnahme die Begrenzung in jedem Fall nicht stärker ausfällt als nötig.

Die Spannungsteiler werden zweckmäßigerweise derart ausgebildet, daß sie das gleiche dynamische Verhalten haben.

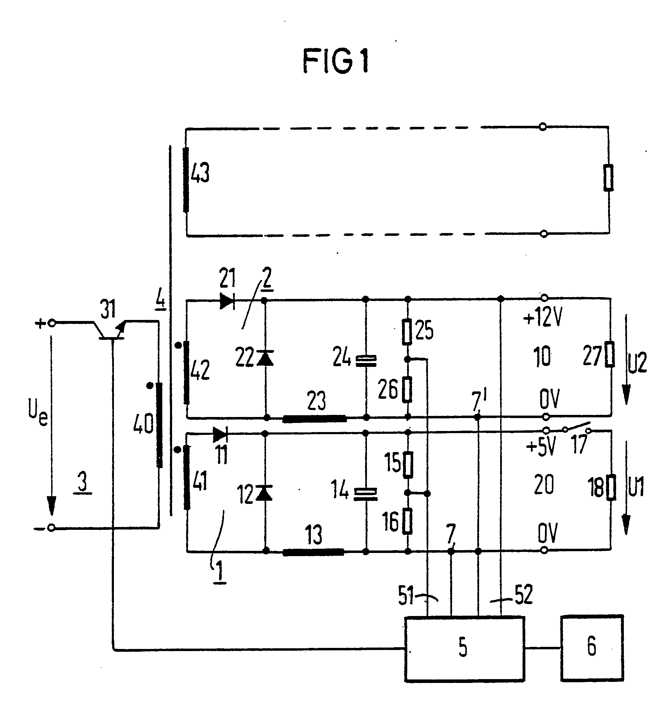

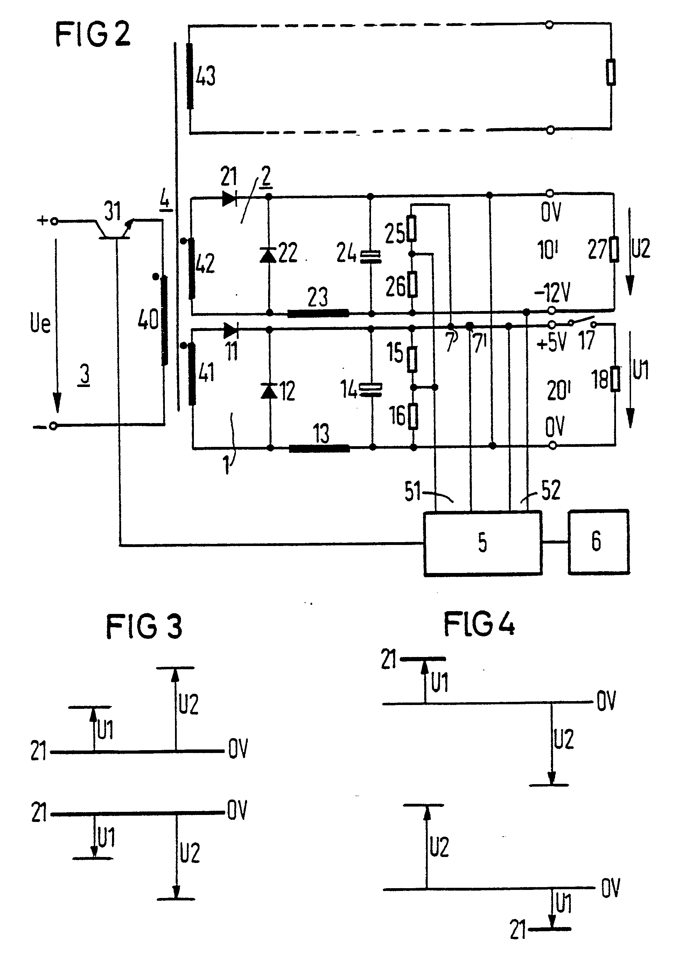

Die Erfindung wird anhand des in Fig. 2 gezeigten Ausführungsbeispiele sowie anhand der in Fig. 1 dargestellten Anordnung und der in den Fig. 3 und 4 dargestellten Diagramme näher erläutert.

Fig. 1 und Fig. 2 zeigen jeweils eine Anordnung zur Regelung einer Spannung, bei der ein mit dem geregelten Kreis gekoppelter weiterer Kreis vorhanden ist, und zwar

Figur 1 für den Fall, daß die beiden Ausgangsspannungen die gleiche Polarität gegenüber einem gemeinsamen Nullpotential haben und

Figur 2 für den Fall, daß die Polaritäten der Ausgangsspannungen gegenüber einem gemeinsamen Nullpotential verschieden sind.

Weiterhin zeigen

Figur 3 die Wahl des Bezugspotentials für den Fall, daß die Ausgangsspannungen der Anordnung die gleiche Polarität haben und

Figur 4 für den Fall, daß die Polaritäten der Ausgangsspannungen unterschiedlich sind.

Die in Fig. 1 gezeigte Anordnung enthält einen Eintakt-Durchflußumrichter, bei dem der Transistor 31 als impulsbreitengesteuerter Schalter dient. Die ungeregelte Eingangsspannung $U_e$ wird über den als Schalter betriebenen Transistor 31 der Primärwicklung 40 des Transformators 4 zugeführt.

An den Sekundärwicklungen 41 und 42 des Transformators 4 liegen der geregelte Kreis 1 und der damit verkoppelte gleichsam mitgeregelte weitere Kreis 2. Die beiden Kreise 1 und 2 sind in gleicher Weise aufgebaut. Auf die Sekundärwicklung 41 bzw. 42 folgt eine Gleichrichterdiode 11 bzw. 21, der eine Freilaufdiode 12 bzw. 22 nachgeschaltet ist. Daran schließt sich ein Siebglied mit einer Längsdrossel 13 bzw. 23 und einem Querkondensator 14 bzw. 24 an. Am Siebkondensator 14 bzw. 24 liegt die Ausgangsspannung U1 bzw. U2. Am Ausgang des geregelten Kreises 1 liegt der Verbraucher 18, der mit Hilfe des Schalters 17 abgetrennt bzw. abgeworfen werden kann. Der weitere Kreis 2 ist durch den weiteren Verbraucher 27 belastet.

Außerdem können noch zusätzliche weitere Kreise vorgesehen sein. Ein Beispiel hierfür ist der weitere Kreis mit der Wicklung 43. Der zur Istwert-Mischung herangezogene weitere Kreis enthält keinen Nachregler. Zusätzliche weitere Kreise können dagegen mit Nachreglern versehen werden. Weiterhin können mehrere der weiteren Kreise an ein und dieselbe Transformatorwicklung angeschlossen sein.

Der Regler 5, der den Stelltransistor 31 im Sinne einer Impulsbreitensteuerung steuert und der mit Hilfe des Taktgebers 6 taktsteuerbar ist, liegt mit seinem Eingang 52 für die Versorgungsspannung an der Ausgangsspannung U2. Der Istwerteingang 51 ist mit seinem einen Anschluß an eine Verbindung der Abgriffe der beiden Spannungsteiler 15, 16 und 25, 26 angeschlossen und liegt mit seinem anderen Anschluß am gemeinsamen Nullpotential der beiden einpolig miteinander verbundenen Ausgänge 10 und 20.

Das Ausführungsbeispiel nach Fig. 2 unterscheidet sich von dem nach Fig. 1 dadurch, daß die Ausgänge 10', 20' derart einpolig miteinander verbunden sind, daß die Ausgangsspannungen U1 und U2, bezogen auf das an der einpoligen Verbindung liegende gemeinsame Nullpotential, entgegengesetzt gepolt sind. Weiterhin ist der Istwerteingang des Reglers 5 mit seinem einen Anschluß an eine Verbindung der Abgriffe der Spannungsteiler 15, 16, und 25, 26 geführt und liegt mit seinem anderen Anschluß am spannungsführenden Anschluß des Ausgangs 20'.

Dabei wird entsprechend Fig. 4 der Anschluß + 5 V als Bezugspotential verwendet. Als Versorgungsspannung des Reglers fungiert die Spannung zwischen den Anschlüssen + 5 V und – 12 V. Auch die Istwertteiler sind auf den Anschluß + 5 V bezogen.

Bei den in den Fig. 1 und 2 gezeigten Einrichtungen ist der geregelte Kreis 1 für eine kleine Ausgangsspannung U1, z. B. 5 V, dimensioniert. Die Ausgangsspannung U2 des weiteren Kreises 2 ist größer und beträgt z. B. 12 V. Mit dieser größeren Ausgangsspannung U2 wird der Regler 5 versorgt.

Wird der Schalter 17 geöffnet und dadurch der Verbraucher 18 vom Kreis 2 abgetrennt, so ändert sich-bedingt durch den dem Regler 5 zugeführten Mischwert der Spannungen U1 und U2 — die Spannung U2 nur unwesentlich. Der Regler arbeitet einwandfrei weiter.

Die Teilwiderstände 15, 16 bzw. 25, 26 der Spannungsteiler können ohmsche Widerstände oder Scheinwiderstände, insbesondere Parallelschaltungen von Kondensatoren und Widerständen sein, die zugleich zur Siebung der Istwerte beitragen. Die Spannungsteiler sind dabei so ausgebildet, daß sie dasselbe dynamische Verhalten haben, d. h. daß ihre Übertragungsfunktionen, abgesehen von der Verstärkung, gleich sind.

Das Mischungsverhältnis der beiden Istwerte wird zweckmäßigerweise durch Bemessung der Innenwiderstände der Spannungsteiler festgelegt.

Die Innenwiderstände der Spannungsteiler werden dabei derart bemessen, daß sich für die Istwerte ein bestimmtes Mischungsverhältnis ergibt. Unter einem Mischungsverhältnis der Istwerte ist im vorliegenden Zusammenhang nach Fig. 1 das Verhältnis des Innenwiderstandes des Teilers des weiteren Kreises zu dem des geregelten Kreises zu verstehen, wobei im Beispiel die Leerlaufspannungen der Teiler gleich sind.

Ein Mischungsverhältnis der Istwerte von 3...6 reicht für viele Anwendungsfälle bereits aus und es ergibt sich dabei der Vorteil, daß die Regelung der Ausgangsgröße des geregelten Kreises durch die Mischung der Istwerte nur unwesentlich beeinflußt wird.

Fig. 3 geht davon aus, daß die Ausgangsspannungen die gleiche Polarität aufweisen. Für diese beiden Fälle wird als Bezugspotential des Reglers das Nullpotential bzw. die auf null Volt liegende einpolige Verbindung der Ausgänge verwendet, wie dies bei dem in Fig. 1 gezeigten Ausführungsbeispiel der Fall ist.

Fig. 4 zeigt die Wahl des Bezugspotentials für die Fälle, in denen die beiden Ausgangsspannungen die entgegengesetzte Polarität haben. Als Bezugspotential dient derjenige Anschluß des Ausganges des geregelten Kreises, wie dies bei dem in Fig. 2 gezeigten Ausführungsbeispiel der Fall ist.

Bei den in Fig. 1 und Fig. 2 gezeigten Anordnungen findet jeweils ein Eintakt-Durchflußumrichter Verwendung. Anstelle eines solchen Umrichters können auch andere Stromrichterschaltungen verwendet werden, bei denen mehrere Ausgangskreise, insbesondere induktiv miteinander gekoppelt sind und durch ein Stellglied gemeinsam beeinflußt werden.

## Patentansprüche

1. Anordnung mit einer Regeleinrichtung zur Regelung einer elektrischen Spannung auf einen konstanten Wert mit Hilfe eines Reglers (5), wobei die konstant zu haltende Spannung (U1) über einen geregelten Kreis (1) zu einem Verbraucher (18) geführt ist und wenigstens ein mit dem geregelten Kreis (1) gekoppelter weiterer Kreis (2) vorhanden ist, an den ein weiterer Verbraucher (27) angeschlossen ist und wobei das vom Regler (5) gesteuerte Stellglied (31) allen Kreisen vorgeschaltet ist, wobei bei dem weiteren Kreis (2) bzw. bei einem der weiteren Kreise zur Begrenzung des Variationsbereiches der dem weiteren Verbraucher (27) über den weiteren Kreis (2) zugeführten Spannung (U2) eine Einrichtung zur Bildung eines Mischwertes aus den Ausgangsgrößen (U1, U2) des geregelten Kreises (1) und wenigstens eines weiteren Kreises (2) vorgesehen ist und der von dieser Einrichtung gebildete Mischwert dem Istwerteingang (51) des Reglers (5) zugeführt ist, wobei die Einrichtung zur Bildung eines Mischwertes je zugeführter Ausgangsspannung (U1, U2) einen Spannungsteiler (15, 16, 25, 26) enthält und wobei die Spannungsteiler einen gemeinsamen Fußpunkt (7, 7') haben und an ihren Abgriffen miteinander verbunden sind und wobei die zwischen der Verbindung der Abgriffe und dem gemeinsamen Fußpunkt (7, 7') liegende Spannung an den Istwerteingang (51) des Reglers (5) geführt ist, dadurch gekennzeichnet, daß die Ausgangsspannungen (U1, U2) die einander entgegengesetzte Polarität in bezug auf das an einer einpoligen Verbindung der Kreise liegende Nullpotential haben und daß der gemeinsame Fußpunkt (7, 7') an der spannungsführenden Seite des Ausganges des geregelten Kreises (1) liegt.

2. Anordnung nach Anspruch 1, dadurch gekennzeichnet, daß die Ausgangsspannung (U2) des weiteren Kreises (2) von der Ausgangsspannung (U1) des geregelten Kreises (1) verschieden ist und daß der Regler (5) mit seinem Eingang (52) für die Versorgungsspannung an den Ausgang des weiteren Kreises (2) angeschlossen ist.

3. Anordnung nach Anspruch 1 oder 2, dadurch gekennzeichnet, daß der Regler (5) ein Regler mit P-, PD- oder PID-Verhalten ist.

4. Anordnung nach einem der Ansprüche 1 bis 3, dadurch gekennzeichnet, daß die Spannungsteiler (15, 16 ; 25, 26) derart ausgebildet sind, daß sie das gleiche dynamische Verhalten haben.

## Claims

1. An arrangement having a regulating device for regulating an electric voltage to a constant value with the assistance of a regulator (5) where the voltage (U1) to be maintained constant is fed via a regulated circuit (1) to a load (18) and at least one further circuit (2) is provided coupied to the regulated circuit (1) and to which a further load (27) is connected, where the control element (31) controlled by the regulator (5) is connected in series with all the circuits, where, in the further circuit (2) or one of the further circuits, in order to delimit the variation range of the voltage (U2) supplied to the further load (27) via the further circuit (2), a device is provided to form a mixed value from the output values (U1, U2) of the regulated circuit (1) and at least one further circuit (2), and the mixed value formed by this device is fed to the actual value input (51) of the regulator (5) where the device which serves to form a mixed value contains one voltage divider (15, 16, 25, 26) in respect of each supplied output voltage (U1, U2), and where the voltage dividers possess a common base (7, 7') and are connected to one another at their tappings, and where the voltage between the connection of the tappings and the common base (7, 7') is fed to the actual value input (51) of the regulator (5), characterised in that the output voltages (U1, U2) possess the opposite polarity to one another relative to the zero potential connected to a unipolar connection of the circuits, and that the common base (7, 7') is connected to the voltage carrying side of the output of the regulated circuit (1).

2. An arrangement as claimed in Claim 1, characterised in that the output voltage (U2) of the further circuit (2) differs from the output voltage (U1) of the regulated circuit (1), and that the regulator (5) is connected by its input (52) for the supply voltage to the output of the further circuit (2).

3. An arrangement as claimed in Claim 1 or 2, characterised in that the regulator (5) is a regulator having P-, PD- or PID-characteristics.

4. An arrangement as claimed in one of the Claims 1 to 3, characterised in that the voltage dividers (15, 16 ; 25, 26) are designed such that they possess the same dynamic behaviour.

**Revendications**

1. Dispositif à système de régulation destiné à la régulation d'une tension électrique sur une valeur constante au moyen d'un régulateur (5), dans lequel la tension à maintenir constante (U1) est amenée à une charge (18) à travers un circuit régulé (1) et où il existe au moins un circuit supplémentaire (2) couplé avec le circuit régulé (1) et auquel est reliée une autre charge (27), et dans lequel l'élément de réglage (31) commandé par le régulateur (5) est connecté en amont à tous les circuits, et dans lequel sur le circuit supplémentaire (2) ou l'un des circuits supplémentaires, il est prévu, pour limiter le domaine de variation de la tension (U2) fournie à l'autre charge (27) à travers le circuit supplémentaire (2) un dispositif destiné à la formation d'une valeur composée à partir des valeurs de sortie du circuit régulé (1) et d'au moins un circuit supplémentaire (2), et où la valeur composée fournie par ce système est amenée à l'entrée du régulateur (5) qui reçoit la valeur instantanée (51), alors que le dispositif destiné à la formation d'une valeur composée comporte, par tension de sortie (U1, U2), un diviseur de tension (15, 16, 25, 26), et que les diviseurs de tension présentent une base commune (7, 7') et sont reliés entre eux à leurs prises de sortie, la tension existant entre la liaison des prises de sortie et la base commune (7, 7') étant appliquée à l'entrée (51) de la valeur instantanée du régulateur (5), caractérisé par le fait que les tensions de sortie (U1, U2) ont des polarités opposées par rapport au potentiel zéro auquel est portée une liaison unipolaire du circuit, et que la base commune (7, 7') se trouve du côté sous tension de la sortie du circuit régulé (1).

2. Dispositif suivant la revendication 1, caractérisé en ce que la tension de sortie (U2) du circuit supplémentaire (2) est différente de la tension de sortie (U1) du circuit régulé et que le régulateur (5) est relié par son entrée (52) recevant la tension d'alimentation à la sortie du circuit supplémentaire (2).

3. Dispositif suivant la revendication 1 ou 2, caractérisé en ce que le régulateur (5) est un régulateur ayant un comportement P (réglage proportionnel), PD (réglage proportionnel et par dérivation) ou PID (réglage proportionnel, par intégration et par différenciation).

4. Dispositif suivant l'une des revendications 1 à 3, caractérisé en ce que les diviseurs de tension (15, 16, 25, 26) sont constitués de façon à avoir le même comportement dynamique.

FIG 1

FIG 2

FIG 3

FIG 4